(19) Europäisches Patentamt
European Patent Office
Office européen des brevets

(11) Publication number: **0 044 958**
**B1**

# (12) EUROPEAN PATENT SPECIFICATION

(45) Date of publication of patent specification: **31.10.84**

(51) Int. Cl.$^3$: **B 01 D 13/04,** A 61 M 1/03, C 08 L 69/00

(21) Application number: **81105019.4**

(22) Date of filing: **29.06.81**

## (54) Plasmapheresis membrane and process for the preparation thereof.

(30) Priority: **25.07.80 SE 8005380**

(43) Date of publication of application:
**03.02.82 Bulletin 82/05**

(45) Publication of the grant of the patent:
**31.10.84 Bulletin 84/44**

(84) Designated Contracting States:
**AT BE CH DE FR GB IT LI LU NL SE**

(56) References cited:
**EP-A-0 024 600**
**WO-A-79/01120**
**DE-A-2 921 138**
**FR-A-2 007 782**
**FR-A-2 156 761**
**FR-A-2 200 035**
**FR-A-2 265 807**
**FR-A-2 265 812**
**FR-A-2 300 606**
**FR-A-2 344 315**

(73) Proprietor: **GAMBRO DIALYSATOREN K.G.**
**Postfach 1323**
**D-7450 Hechingen (DE)**

(72) Inventor: **Goehl, Hermann Joseph**
**Ganswies 8**
**D-7457 Zimmern-Bisingen (DE)**
Inventor: **Buck, Reinhold Johann**
**Ortsstrasse 27**
**D-7941 Alleshausen (DE)**

(74) Representative: **Boberg, Nils Gunnar Erik**
**Gambro AB Patent Department Box 10101**
**S-220 10 Lund (SE)**

(56) References cited:
**JOURNAL MACROMOL. SCI. CHEM., A 4 (3), May, 1970, New York, US R.E. KESTING "Control of polymer morphology of biomedical applications. I. Hydrophilic polycarbonate membranes for dialysis" pages 655-664**

**EP 0 044 958 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

TECHNICAL FIELD

The present invention relates to a microporous membrane of biocompatible polymer for use in plasmapheresis and having a cut-off of up to $3 \times 10^6$ Dalton.

Furthermore, it relates to a process for preparation of said membrane, wherein a solution of hydrophilic polycarbonate chosen among polycondensates of bisphenol A and polyalkylene oxide, having the following general chemical formula:

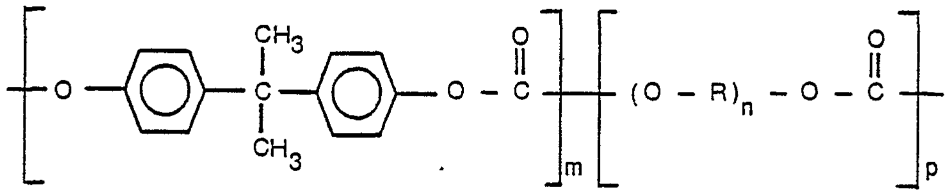

wherein R is designating $—CH_2CH_2—$ or combinations of

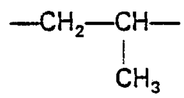

and $—CH_2—CH_2—$, preferably $—CH_2CH_2—$,
m = 40—100, preferably 80,
n = 10—155, preferably 152, and
p = 0.5—3, preferably 1,
is applied in the form of a layer upon a smooth surface and, thereafter, is precipitated and washed for forming said membrane.

With the expression "plasmapheresis" is intended to mean a blood separation procedure, wherein blood cells are separated from plasma by means of a membrane which is permeable to said plasma but which is retaining said blood cells. Such a procedure differs from other similar types of blood separation procedures, such as hemofiltration, as regards the associated cut-off for the used membrane. In hemofiltration said cut-off is usually of the order of magnitude of $10^3 - 5 \times 10^4$ Dalton, while the corresponding cut-off in plasmapheresis is up to $3 \times 10^6$ Dalton.

TECHNICAL BACKGROUND

In the literature there are described membranes (as well as processes for preparation thereof) of the above-mentioned kind. For example in Trans. Am. Soc. Artrif. Intern. Org. 1978, pp. 21—26 there is described the use of a hydrophobic polycarbonate membrane having pores which are formed through neutron radiation and etching in association therewith. This membrane displays a regular pore structure, but has a low porosity. Furthermore, the pore openings comprise a sharp edge which may cause destroying of blood cells (hemolysis), when said membrane is used in plasmapheresis. Due to the low porosity and also due to the polymeric characteristics said membrane furthermore has a low filtration capacity, such as 0.004 ml/s $\times$ bar $\times$ $cm^2$.

Hemodialysis membranes made of a hydrophilic polycarbonate block copolymer and processes for preparing such membranes are disclosed in GB—A—1 556 898 and FR—A—2 265 812.

In the above article as well as in DE—A—22 57 697 and DE—A—28 28 616 there are described plasmapheresis membranes on the basis of cellulose acetate, either in the form of hollow fibers or in the form of flat sheets. Also by these membranes there is the risk of hemolysis. A further disadvantage is that the permeability for substances having molecular weights of between $1 \times 10^6$ and $3 \times 10^6$ Dalton is low. For example, the permeability coefficient for factor VIII (molecular weight $2 \times 10^6$) is as low as 0.2—0.4. Furthermore, the Nieviny coefficient for high-molecular substances (above 500,000 Dalton) is drastically decreasing after filtrations of ca 15—30 minutes.

An object of the present invention is therefore to provide a membrane of the kind defined in the preamble of claim 1, which in contrast to the above prior art membranes displays a regular pore structure comprising smoothly rounded pore openings without sharp edges. Furthermore, the present membrane shall have a high permeability or filtration capacity for also high molecular substances of up to $3 \times 10^6$ Dalton with simultaneous high filtration rate for plasma without drastically decreasing permeability coefficients.

A further object is to provide a process for preparation of such an improved membrane for plasmapheresis.

## BRIEF DESCRIPTION OF INVENTION

According to the invention is provided a microporous membrane of biocompatible polymer for use in plasmapheresis and having a cut-off of the order of magnitude of up to $3 \times 10^6$ Dalton. The membrane is characterized in that said polymer is a hydrophilic polycarbonate chosen among polycondensates of bisphenol A and polyalkylene oxide, having the following general chemical formula:

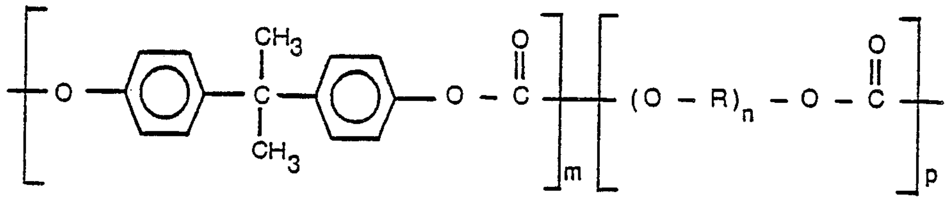

wherein R is designating $—CH_2CH_2—$ or combinations of

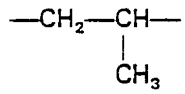

and $—CH_2—CH_2—$, preferably $—CH_2CH_2—$,
m = 40—100, preferably 80,
n = 10—155, preferably 152, and
p = 0.5—3, preferably 1.

According to the invention is also provided a process for preparing a microporous plasmapheresis membrane. The process is characterized in that the so applied polymer layer is brought into contact with a gelling medium of a mixture of a polar solvent and an alcohol prior to said precipitation and washing.

## DETAILED DESCRIPTION OF INVENTION

Preferably said polycondensate is the polycondensation product between bisphenol A and a polyalkylene oxide having a molecular weight of 600—20,000 Dalton. Said polyalkylene oxide is thereby used in amounts ranging within 5—40% by weight, preferably 35% by weight.

Conveniently, the present membrane has an average pore diameter of 0.1—0.8 $\mu$m, preferably 0.6 $\mu$m. Furthermore, its porosity is usually above 65%, whereby high filtration rates are secured.

The membrane thickness may vary as desired, but is generally within 50—300 $\mu$m. Preferably said thickness is 100.

Preferably the polymer is constituted by an organic solvent or mixtures of such solvents, and a non-solvent, whereby said hydrophilic polycarbonate is present in amounts ranging between 3 and 10% by weight. Said non-solvent is used in amounts of 15% by weight at most, such as 1—6% by weight.

Examples of said organic solvent may be dioxane, dioxolane, DMSO, DMF and mixtures thereof. Examples of said non-solvent may be polyalkylene oxide, salt, glycerine, PVP etc.

The viscosity of said solution is usually set within 0.2—20 Pa·s (200 and 20,000 cP), preferably 0.7 Pa·s (700 cp), measured at 20°C.

Suitably, said solution is applied on the smooth surface through casting via a casting gap of a height pre-set on a suitable value in dependence on the desired final membrane thickness. Preferably use is made of dust-free conditions with nitrogen at a constant temperature, for example 10—25°C, for said application.

Alternatively, said polymer solution may be extruded in the form of a hollow fiber by using special center-liquids simultaneously extruded through the center cavity of the used die.

In accordance with the present invention DMF may be used as said polar solvent, and methanol may be used as said alcohol. The mixing ratio between DMF and methanol may vary between 2:1 and 1:2, preferably 1:1.

The temperature of said gelling medium is suitably maintained at 15—25°C, preferably 21°C.

In order to achieve shelf-stable characteristics of the present membrane said membrane is exposed to a post-treatment. Said post-treatment may comprise in turn treating with alcohol and alcohol/glycerine. Said alcohol is then removed to leave glycerine making the membrane shelf-stable. Conveniently, said alcohol is removed through evaporation at low temperatures, such as 40—70°C.

The so prepared membrane is symmetric and self-supporting, and has a thickness of 50—300 $\mu$m, preferably 100. Furthermore, it displays high flexibility.

An especial characteristic of said membrane is the ability of being welded, whereby welding temperatures of 180—200°C are used.

The filtration capacity in use as a plasmapheresis membrane is measured in a special plasmapheresis cell with defined flowing rates at a membrane surface of 45 $cm^2$, a transmembrane pressure of 13,300 Pa (100 mmHg), a blood flow of 100 ml/minute at 20°C according to the following.

Said blood in this test had a hematocrit of 25% and a total concentration of protein of 70 g. The measured value, i.e. the permeate per time, pressure and surface was 10 ml/minute. The retaining capacity for example factor VIII (molecular weight $2 \times 10^6$) was under said conditions about 5%.

The invention will be further illustrated by the following examples.

Example 1

7% of a polycarbonate, which was obtained through polycondensation between bisphenol A and PEG 5000 (6.5:3.5), was dissolved in 90% 1.3-dioxalane at room temperature, mixed with 3% PEG 10000, and filtered through a 2 $\mu$m filter and degassed under vacuum. The solvent viscosity was 1 Pa·s (1000 cP) at 20°C. The polymer solution, as cast on a smooth surface, was transported through a methanol/DMF-bath (1:1) at 20°C, whereby residence time of at least 1 minute was used. Still on said surface the so gelled polymer layer was transported in turn through wash baths with water of 20, 40 and 60°C. Then, the membrane was removed from said surface.

The so prepared membrane had the following characteristics:
Filtration for water (20°C, 0.1 bar): 3 ml/s x bar x $cm^2$
Retaining capability for factor VIII: 5%
Permeability to albumin 68000: 100%
Retaining capability for total protein: 0%

Example 2

6% polycarbonate was dissolved at room temperature in 90% 1.3-dioxalane, mixed with 4% Pluriol 6800 (polypropylene-polyethylene oxide block copolymer), and filtered and degassed. The solution was cast on a belt, transported through a DMSO/methanol-bath (1:1), and thereafter through a water bath of 20°C.

The so prepared membrane has the following characteristics:
Filtration for water (0.1 bar): 0.1 ml/s $\times$ bar $\times$ $cm^2$
Retaining capability for factor VIII: 30%
Permeability to albumin 68000: 100%
Retaining capability for total protein: 20%

Example 3

7% of the polycarbonate, which was obtained through polycondensation between bisphenol A and PEG 5000 (6.5:3.5), was dissolved in 90% 1.3-dioxalane at room temperature, mixed with 3% PEG 10000, filtered over a 2 $\mu$m filter and degassed under vacuum. The solvent viscosity was 1 Pa·s (1000 cP) at 20°C. The solution, as cast on a belt, was transported through a DMSO/methanol-bath (2:1), whereby the residence time in said bath was at least 2 minutes. The so cast and gelled polymer layer was then transported through a water bath of 25°C.

The so prepared membrane had the following characteristics:
Filtration for water (0.1 bar): 0.1 ml $\times$ s $\times$ bar $\times$ $cm^2$
Retaining capability for factor VIII: 80%
Permeability to albumin 68000: 70%
Retaining capability for total protein: 30%

INDUSTRIAL APPLICABILITY

The present membrane is intended for use in plasmapheresis, i.e. a blood separation procedure according to which whole blood is separated into blood cells and plasma through contacting said whole blood with one side of said membrane, wherein the blood cells are retained on said one side, while the plasma is penetrating through the membrane and collected on the other side thereof. Said separation is conducted through influence of the pressure gradient which is maintained between said two sides of the membrane.

## Claims

1. A microporous membrane of biocompatible polymer for use in plasmapheresis and having a cut-off of the order of magnitude of up to $3 \times 10^6$ Dalton, characterized in that said polymer is a hydrophilic polycarbonate chosen among polycondensates of bisphenol A and polyalkylene oxide, having the following general chemical formula:

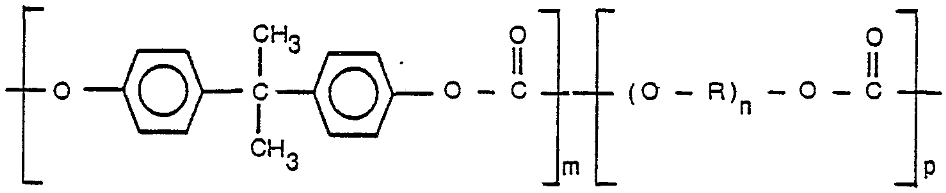

wherein R is designating $—CH_2CH_2—$ or combinations of

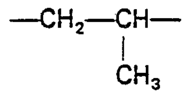

and $—CH_2—CH_2—$, preferably $—CH_2CH_2—$,
m = 40—100, preferably 80,
n = 10—155, preferably 152, and
p = 0.5—3, preferably 1.

2. A membrane in accordance with claim 1, characterized in that said polycondensate is obtained through polycondensation between bisphenol A and a polyalkylene oxide having a molecular weight of 600—20,000.

3. A membrane in accordance with claim 2, characterized in that said polyalkylene oxide is present in an amount of 5—40% by weight.

4. A membrane in accordance with any of claims 1—3, characterized in that it has an average pore diameter of 0.1—0.8 $\mu$m, preferably 0.6 $\mu$m, and a porosity of above 65%.

5. A membrane in accordance with any of claims 1—4, characterized in that it has a thickness of 50—300 $\mu$m, preferably 100.

6. A process for preparing a microporous plasmapheresis membrane of claim 1, wherein a solution of a hydrophilic polycarbonate chosen among polycondensates of bisphenol A and polyalkylene oxide, having the following general chemical formula:

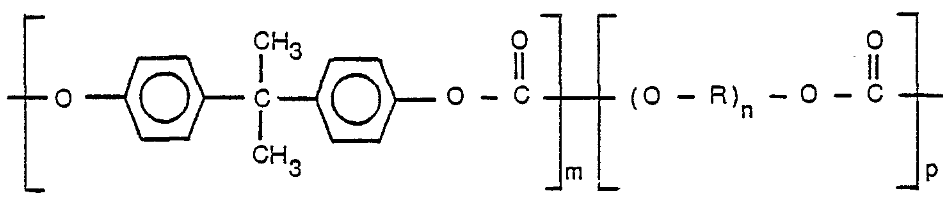

wherein R is designating $—CH_2CH_2—$ or combinations of

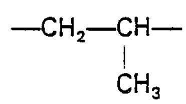

and $—CH_2—CH_2—$, preferably $—CH_2CH_2—$,
m = 40—100, preferably 80,
n = 10—155, preferably 152, and
p = 0.5—3, preferably 1,
is applied in the form of a layer upon a smooth surface and thereafter precipitated and washed, characterized in that the so applied polymer layer is brought into contact with a gelling medium of a mixture of a polar solvent and an alcohol prior to said precipitation and washing.

7. Process in accordance with claim 6, characterized in that the used polymer solution is constituted by one or more organic solvents, and a non-solvent for said polycarbonate.

8. Process in accordance with claim 7, characterized in that dioxane, dioxalane, DMSO, DMF or mixtures thereof are used as said organic solvent or solvents, and in that polyalkylene oxide, salt, glycerine or PVP is used as said non-solvent.

9. Process in accordance with claim 7 or 8, characterized in that said polycarbonate is used in an amount of between 3 and 10% by weight, wherein said non-solvent is used in an amount of 15% by weight at most, such as 1—6% by weight.

10. Process in accordance with any of claims 6—9, characterized in that the solution viscosity is set at 0.2—20 Pa·s (200—20,000 cP) at 20°C.

11. Process in accordance with any of claims 6—10, characterized in that said polymer solution is applied upon the surface under dust-free conditions in nitrogen at a constant temperature, such as 10—25°C.

12. Process in accordance with any of claims 6—11, characterized in that said gelling medium is constituted by DMF and methanol in a mixing ratio of 2:1—1:2.

13. Process in accordance with any of claims 6—12, characterized in that said gelling medium is maintained at a temperature of 15—25°C.

14. Process in accordance with any of claims 6—13, characterized in that said membrane is post-treated in order by alcohol and alcohol/glycerine, whereafter said alcohol is removed through evaporation at low temperature for leaving glycerine, thereby making said membrane shelf-stable.

**Patentansprüche**

1. Mikroporöse Membran eines biologisch verträglichen Polymers für die Verwendung in der Plasmaphorese und mit einer Ausschlußgrenze in der Größenordnung von bis zu 3 x 10 Dalton, dadurch gekennzeichnet, daß das Polymer ein hydrophiles Polycarbonat ist, das unter Polykondensaten von Bisphenol A und Polyalkylenoxid der folgenden allgemeinen chemischen Formel:

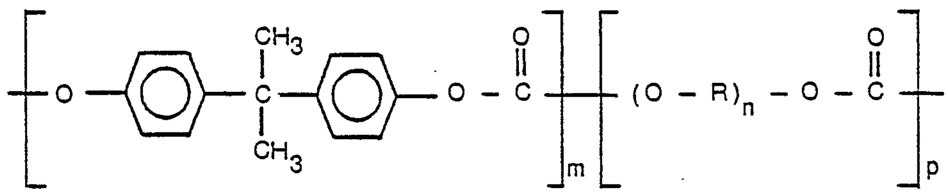

ausgewählt ist, worin R $—CH_2CH_2—$ oder Kombinationen von

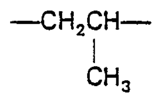

und $—CH_2—CH_2—$, vorzugsweise $—CH_2CH_2—$, bedeutet, $m = 40$ bis 100, vorzugsweise 80 ist, $n = 10$ bis 155, vorzugsweise 152 ist und $p = 0{,}5$ bis 3, vorzugsweise 1 ist.

2. Membran nach Anspruch 1, dadurch gekennzeichnet, daß das Polykondensat durch Polykondensation zwischen Bisphenol A und einem Polyalkylenoxid mit einem Molekulargewicht von 600 bis 20 000 erhalten wurde.

3. Membran nach Anspruch 2, dadurch gekennzeichnet, daß das Polyalkylenoxid in einer Menge von 5 bis 40% Gewichts-% vorliegt.

4. Membran nach einem der Ansprüche 1 bis 3, dadurch gekennzeichnet, daß sie einen mittleren Porendurchmesser von 0,1 bis 0,8 $\mu m$, vorzugsweise von 0,6 $\mu m$, und eine Porosität oberhalb 65% hat.

5. Membran nach einem der Ansprüche 1 bis 4, dadurch gekennzeichnet, daß sie eine Dicke von 50 bis 300 $\mu m$, vorzugsweise von 100 hat.

6. Verfahren zur Herstellung einer mikroporösen Plasmaphoresemembran nach Anspruch 1, bei dem eine Lösung eines hydrophilen Polycarbonats, das unter Polykondensaten von Bisphenol A und Polyalkylenoxid ausgewählt ist und die folgende allgemeine chemische Formel:

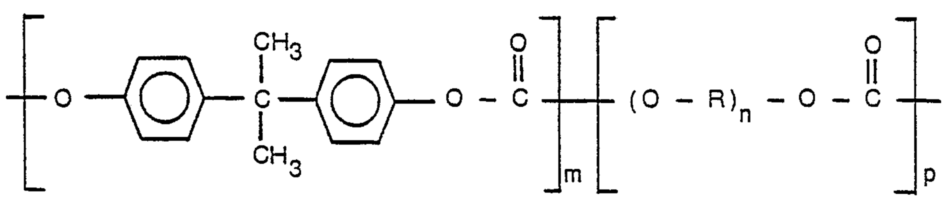

besitzt, worin R $—CH_2CH_2—$ oder Kombinationen von

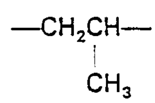

und $—CH_2—CH_2—$, vorzugsweise $—CH_2CH_2—$, bedeutet, $m = 40$ bis 100, vorzugsweise 80 ist,

n = 10 bis 155, vorzugsweise 152 ist und p = 0,5 bis 3, vorzugsweise 1 ist, in der Form einer Schicht auf eine glatte Oberfläche aufgebracht wird, worauf ausgefällt und gewaschen wird, dadurch gekennzeichnet, daß die so aufgebrachte Polymerschicht vor der Ausfällung und dem Waschen in Berührung mit einem gelbildenden Medium eines Gemisches eines polaren Lösungsmittels und eines Alkohols gebracht wird.

7. Verfahren nach Anspruch 6, dadurch gekennzeichnet, daß die verwendete Polymerlösung von einem oder mehreren organischen Lösungsmitteln und einem Nichtlösungsmittel für das Polycarbonat gebildet wird.

8. Verfahren nach Anspruch 7, dadurch gekennzeichnet, daß Dioxan, Dioxalan, DMSO, DMF oder Gemische derselben als das organische Lösungsmittel oder die organischen Lösungsmittel verwendet werden und daß Polyalkylenoxid, Salz, Glycerin oder PVP als das Nichtlösungsmittel verwendet werden.

9. Verfahren nach Anspruch 7 oder 8, dadurch gekennzeichnet, daß das Polycarbonat in einer Menge zwischen 3 und 10 Gewichts-% benutzt wird, wobei das Nichtlösungsmittel in einer Menge von höchstens 15 Gewichts-%, wie 1 bis 6 Gewichts-%, verwendet wird.

10. Verfahren nach einem der Ansprüche 6 bis 9, dadurch gekennzeichnet, daß die Lösungsviskosität auf 0,2 bis 20 Pa x s (200 bis 20 000 cP) bei 20°C eingestellt wird.

11. Verfahren nach einem der Ansprüche 6 bis 10, dadurch gekennzeichnet, daß die Polymerlösung auf die Oberfläche unter staubfreien Bedingungen in Stickstoff bei einer konstanten Temperatur, wie 10 bis 25°C aufgebracht wird.

12. Verfahren nach einem der Ansprüche 6 bis 11, dadurch gekennzeichnet, daß das gebildende Medium von DMF und Methanol in einem Mischungsverhältnis von 2:1 bis 1:2 gebildet wird.

13. Verfahren nach einem der Ansprüche 6 bis 12, dadurch gekennzeichnet, daß das gebildende Medium auf einer Temperatur von 15 bis 25°C gehalten wird.

14. Verfahren nach einem der Ansprüche 6 bis 13, dadurch gekennzeichnet, daß die Membran in der Reihenfolge mit Alkohol und Alkohol/Glycerin nachbehandelt wird, wonach der Alkohol durch Verdampfen bei niedriger Temperatur entfernt wird, um Glycerin zu hinterlassen und so die Membran selbsttragend zu machen.

## Revendications

1. Membrane microporeuse d'un polymère biocompatible pour plasmaphorèse, d'un pouvoir de séparation d'un ordre de grandeur atteignant 3 x $10^6$ Dalton, caractérisée en ce que ledit polymère est un polycarbonate hydrophile appartenant au groupe des produits de polycondensation du bisphénol A et de l'oxyde de polyalkylène, de formule générale:

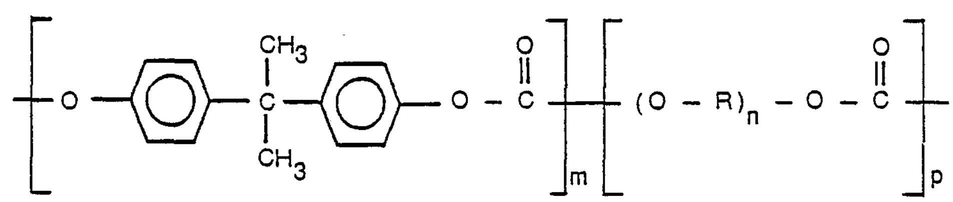

où R désigne un groupe $-CH_2CH_2-$ ou des combinaisons de

$$-CH_2-\underset{CH_3}{\underset{|}{CH}}-$$

et $-CH_2-CH_2-$, de préférence $-CH_2CH_2-$,
m = 40—100, de préférence 80,
n = 10—155, de préférence 152, et
p = 0,5—3, de préférence 1.

2. Membrane selon la revendication 1, caractérisée en ce qu'on obtient ledit produit de polycondensation par polycondensation entre le bisphénol A et un oxyde de polyalkylène d'un poids moléculaire compris entre 600 et 20 000.

3. Membrane selon la revendication 2, caractérisée en ce que ledit oxyde de polyalkylène est présent dans la proportion de 5 à 40% en poids.

4. Membrane selon l'une des revendications 1 à 3, caractérisée en ce qu'elle comprend des pores dont le diamètre moyen est de 0,1 à 0,8 $\mu m$, de préférence 0,6 $\mu m$, et présente une porosité supérieure à 65%.

5. Membrane selon l'une des revendications 1 à 4, caractérisée en ce qu'elle a une épaisseur comprise entre 50 et 300 $\mu m$, de préférence 100 $\mu m$.

6. Procédé de préparation d'une membrane microporeuse selon la revendication 1, selon lequel une solution d'un polycarbonate hydrophile, appartenant au groupe des produits de polycondensation du bisphénol A et d'un oxyde polyalkylène, de formule générale:

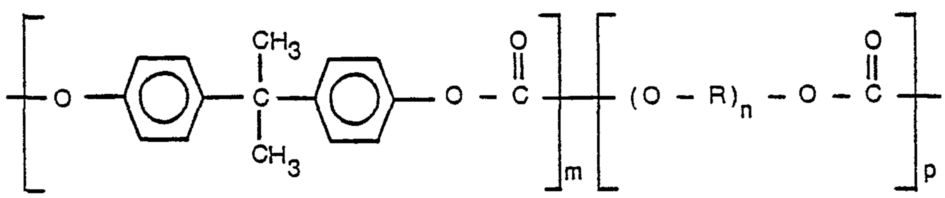

où R désigne un groupe $—CH_2CH_2—$ ou des combinaisons de

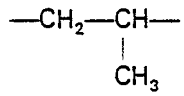

et $—CH_2—CH_2—$, de préférence $—CH_2CH_2—$,
m = 40—100, de préférence 80,
n = 10—155, de préférence 152, et
p = 0,5—3, de préférence 1,
est appliquée sous forme d'une couche sur une surface lisse, puis précipitée et lavée, procédé caractérisé en ce que la couche de polymère ainsi appliquée est mise en contact avec un milieu gélifiant d'un mélange d'un solvant polaire et d'un alcool, avant ladite précipitation et ledit lavage.

7. Procédé selon la revendication 6, caractérisé en ce que la solution de polymère utilisée est constituée d'un ou de plusieurs solvants organiques et d'un non solvant pour ledit polycarbonate.

8. Procédé selon la revendication 7, caractérisé en ce qu'on utilise comme solvants organiques le dioxane, le dioxalane, le DMSO, le DMF ou leurs mélanges, et qu'on utilise comme non solvant l'oxyde de polyalkylène, le sel, la glycérine ou le PVP.

9. Procédé selon l'une des revendications 7 et 8, caractérisé en ce qu'on utilise ledit polycarbonate dans une proportion de 3 à 10% en poids, le non solvant étant utilisé dans une proportion de 15% en poids au plus, telle que 1 à 6% en poids.

10. Procédé selon l'une des revendications 6 à 9, caractérisé en ce qu'on ajuste la viscosité de la solution entre 0,2 et 20 Pa$^+$s (200—20 000 cP) à 20°C.

11. Procédé selon l'une des revendications 6 à 10, caractérisé en ce qu'on applique la solution de polymère sur une surface à l'abri des poussières, sous atmosphère d'azote, à une température constante par exemple comprise entre 10 et 25°C.

12. Procédé selon l'une des revendications 6 à 11, caractérisé en ce que le milieu gélifiant est constitué par le DMF et le méthanol, dans un rapport de mélange de 2:1 à 1:2.

13. Procédé selon l'une des revendications 6 à 12, caractérisé en ce qu'on maintient le milieu gélifiant à une température de 15 à 25°C.

14. Procédé selon l'une des revendications 6 à 13, caractérisé en ce que ladite membrane subit un post-traitement par un alcool et un mélange alcool/glycérine successivement, après quoi l'alcool est éliminé par évaporation à basse température, pour laisser subsister la glycérine, et rendre de cette manière la membrane stable à la conservation.